# EUROPEAN PATENT APPLICATION

(11) **EP 3 854 517 A1**
(43) Date of publication of application: **28.07.2021**
(21) Application number: 20827441.5
(22) Date of filing: 05.06.2020
(51) Int. Cl.: B23P 15/00

(54) **NOVEL HOLLOW SHAFT MANUFACTURING METHOD**

(30) Priority: 18.06.2019 CN 201910525970
(71) Applicant: Changshu Synergy Automobile Parts Co., Ltd., Jiangsu 215500 (CN)
(72) Inventor: KUWAHARA, Yasuhiro, Nishinomiya, Hyogo 662-0963 (JP)
(74) Representative: Gong, Jinping
(86) International application number: PCT/CN2020/094502
(87) International publication number: WO 2020/253550

(57) **Abstract**

Disclosed is a novel hollow shaft manufacturing method, comprising the steps of hollow cold-rolling of seamless steel pipe, cutting, annealing and surface treatment, forming by forging, precision machining, and heat treatment. The present invention uses a new process instead of the traditional process. The forging process using high-strength cold-rolled seamless steel pipes has fewer steps than using bar stock: saving three forging passes, one annealing pass and one surface treatment pass, hence saving about 1/2 in time and cost, shortening the cycle, reducing costs, reducing energy consumption and reducing the three wastes, increasing the stock utilization rate to about 68%, and reducing the inter-process cost calculated by weight. For the same products, using this process can shorten the production cycle.

## Description

### TECHNICAL FIELD

The invention relates to the technical field of hollow shafts, and specifically to a manufacturing method for forging a hollow shaft from a high-strength hollow cold-rolled seamless steel pipe.

### BACKGROUND ART

According to the current manufacturing process of hollow shafts, a bar is cut to the lengths for forging, after forging, the forgings are machined into hollow shafts by boring and turning. The hollow shaft manufacturing process from bars by forging, turning and boring has the disadvantages such as a low stock utilization rate of about 30%, a long machining cycle and a high cost. Traditional bar stock process path requires multiple forging steps for forming, two annealing steps and phosphorous saponification treatments.

### SUMMARY OF THE INVENTION

The present invention provides a novel hollow shaft manufacturing method, which comprises the following steps:
Step 1: Hollow cold-rolling of seamless steel pipes, enabling the inner and outer diameters of the seamless steel pipes meet the size requirements, in lengths of 4-6m;
Step 2: Cutting. The cold-rolled seamless steel pipes are cut to the required lengths with a circular saw;
Step 3: Annealing and surface treatment. After cutting, the cold-rolled seamless steel pipes are softened by spheroidizing annealing or traditional annealing, and then subjected to phosphorous saponification treatment or environmentally friendly surface lubrication treatment;
Step 4: Forming by forging. Forging is conducted with a long-stroke multi-stage forging machine;
Step 5: Precision machining. Both turning and milling steps are conducted on the forged hollow shafts;
Step 6: Heat treatment. Quenching and tempering or carburizing heat treatment steps are conducted on the hollow shafts after precision machining.

Further, the step of forming by forging described in step 4 comprises three forging passes. The first forging pass is to put the stocks annealed and surface-treated in step 3 into the dies of the first forging pass to make the seamless steel pipe pressed into a stepped hollow shaft from both the outer diameter and inner hole; the second forging pass is to put the blanks made by the first die forging pass into the dies of the second forging pass for heading to form a flange between the upper die and the lower die; the third forging pass is to put the products made by means of the dies of the second forging pass into the dies of the third forging pass, and the mandrel with spline is used to form the tooth shape by pressing.

The present invention uses a new process instead of the traditional process. The forging process using high-strength cold-rolled seamless steel pipes has fewer steps than using bar stock: saving three forging passes, one annealing pass and one surface treatment pass, hence saving about 1/2 in time and cost, shortening the cycle, reducing costs, reducing energy consumption and reducing the three wastes, increasing the stock utilization rate to about 68%, and reducing the inter-process cost calculated by weight. For the same products, using this process can shorten the production cycle.

### DESCRIPTION OF THE FIGURES

Fig. 1 is a flow chart of the manufacturing method of the present invention.
Fig. 2 is a schematic diagram of dies of a three-pass forging process used for manufacturing a hollow motor shaft according to the present invention.
Fig. 3 is a schematic diagram of the hollow motor shaft structure used in the forging process for manufacturing the hollow motor shaft according to the present invention.
Fig. 4 is a schematic diagram of dies of a three-pass forging process used for manufacturing a hollow motor shaft according to the present invention.
Fig. 5 is a schematic diagram of the hollow motor shaft structure used in the forging process for manufacturing the hollow motor shaft according to the present invention.

### SPECIFIC MODE OF EXECUTION

### Example 1

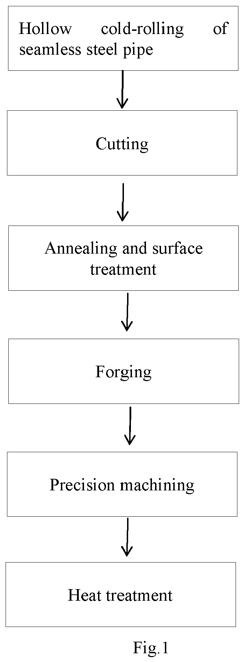

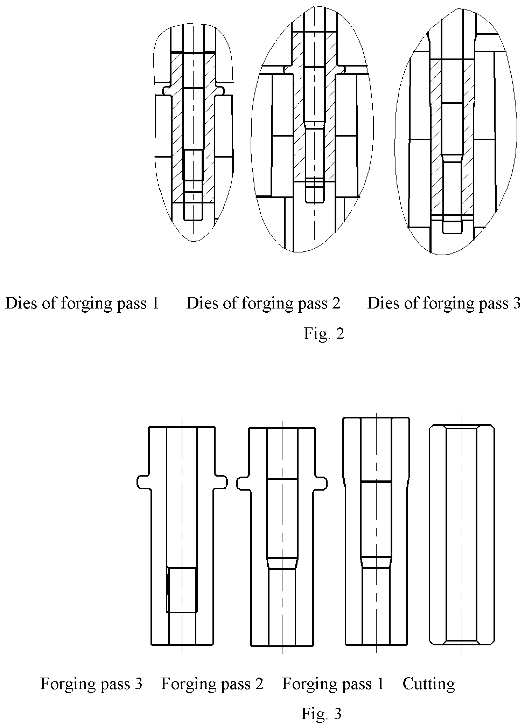

Referring to Figures 1, 2 and 3, when manufacturing a hollow motor shaft, follow the steps below:
Step 1: Hollow cold-rolling of seamless steel pipes, enabling the inner and outer diameters of the seamless steel pipes meet the size requirements, in lengths of 4-6m;
Step 2: Cutting. The cold-rolled seamless steel pipes are cut to the required lengths with a circular saw;
Step 3: Annealing and surface treatment. After cutting, the cold-rolled seamless steel pipes are softened by spheroidizing annealing or traditional annealing, and then subjected to phosphorous saponification treatment or environmentally friendly surface lubrication treatment;
Step 4: Forming by forging. Forging is conducted with a long-stroke multi-stage forging machine; first, put the stocks annealed and surface-treated in step 3 into the dies of the first forging pass as shown in Fig. 2, so that the seamless steel pipe is pressed into a stepped hollow motor shaft from both the outside diameter and inner hole, to form the blank structure of the first forging pass as shown in Fig. 3; secondly, the blank structure made by the dies in the first forging pass is placed into the dies of the second forging pass as shown in Fig. 2 for heading to form a flange between the upper die and the lower die, to establish the product structure of the second forging pass as shown in Fig. 3; finally, the product structure finished by means of dies of the second forging pass is put into the dies of the third forging pass as shown in Fig. 2, and the mandrel with spline is used to form the tooth shape by pressing to form the finished product structure of the third forging pass as shown in Fig. 3.
Step 5: Precision machining. Both turning and milling steps are conducted on the forged hollow shafts;
Step 6: Heat treatment. Quenching and tempering or carburizing heat treatment steps are conducted on the hollow shafts after precision machining.

### Manufacturing is completed.

### Sample 2

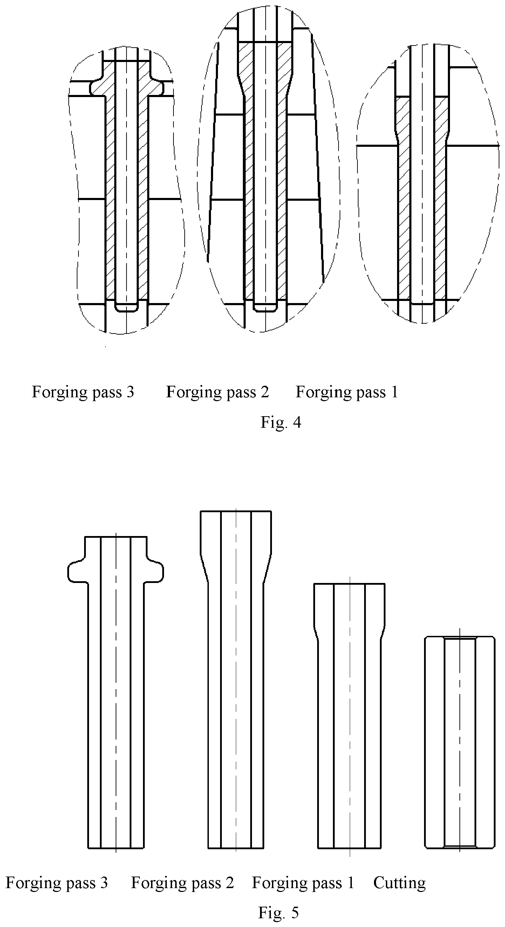

Referring to Figures 1, 4 and 5, when manufacturing a hollow motor shaft, follow the steps below:
Step 1: Hollow cold-rolling of seamless steel pipes, enabling the inner and outer diameters of the seamless steel pipes meet the size requirements, in lengths of 4-6m;
Step 2: Cutting. The cold-rolled seamless steel pipes are cut to the required lengths with a circular saw;
Step 3: Annealing and surface treatment. After cutting, the cold-rolled seamless steel pipes are softened by spheroidizing annealing or traditional annealing, and then subjected to phosphorous saponification treatment or environmentally friendly surface lubrication treatment;
Step 4: Forming by forging. Forging is conducted with a long-stroke multi-stage forging machine; first, put the stocks annealed and surface-treated in step 3 into the dies of the first forging pass as shown in Fig. 4, so that the seamless steel pipe is pressed into a stepped hollow motor shaft from both the outside diameter and inner hole, to form the blank structure of the first forging pass as shown in Fig. 5; secondly, the blank structure made by the dies in the first forging pass is placed into the dies of the second forging pass as shown in Fig. 4 for heading to form a flange between the upper die and the lower die, to establish the product structure of the second forging pass as shown in Fig. 3; finally, the product structure finished by means of dies of the second forging pass is put into the dies of the third forging pass as shown in Fig. 4, and the mandrel with spline is used to form the tooth shape by pressing to form the finished product structure of the third forging pass as shown in Fig. 5.
Step 5: Precision machining. Both turning and milling steps are conducted on the forged hollow shafts;
Step 6: Heat treatment. Quenching and tempering or carburizing heat treatment steps are conducted on the hollow shafts after precision machining.

Manufacturing is completed.

## Claims

1. A new type of hollow shaft manufacturing method, wherein it comprises the following steps:
Step 1: Hollow cold-rolling of seamless steel pipes, enabling the inner and outer diameters of the seamless steel pipes meet the size requirements, in lengths of 4-6m;
Step 2: Cutting. The cold-rolled seamless steel pipes are cut to the required lengths with a circular saw;
Step 3: Annealing and surface treatment. After cutting, the cold-rolled seamless steel pipes are softened by spheroidizing annealing or traditional annealing, and then subjected to phosphorous saponification treatment or environmentally friendly surface lubrication treatment;
Step 4: Forming by forging. Forging is conducted with a long-stroke multi-stage forging machine;
Step 5: Precision machining. Both turning and milling steps are conducted on the forged hollow shafts;
Step 6: Heat treatment. Quenching and tempering or carburizing heat treatment steps are conducted on the hollow shafts after precision machining.

2. A new type of hollow shaft manufacturing method according to claim 1, wherein:
the step of forming by forging described in step 4 comprises three forging passes. The first forging pass is to put the stocks annealed and surface-treated in step 3 into the dies of the first forging pass to make the seamless steel pipe pressed into a stepped hollow shaft from both the outer diameter and inner hole; the second forging pass is to put the blanks made by the first die forging pass into the dies of the second forging pass for heading to form a flange between the upper die and the lower die; the third forging pass is to put the products made by means of the dies of the second forging pass into the dies of the third forging pass, and the mandrel with spline is used to form the tooth shape by pressing.
